# EUROPEAN PATENT APPLICATION

(11) **EP 1 744 208 A1**
(43) Date of publication of application: **17.01.2007**
(21) Application number: 06425471.7
(22) Date of filing: 07.07.2006
(51) Int. Cl.: G03B 17/56, F16M 11/08

(54) **Device for levelling a support, particularly a support for cameras and cinecameras**

(30) Priority: 15.07.2005 IT RM20050379
(71) Applicant: De Rubeis, Francesco, 00042 Anzio RM (IT)
(72) Inventor: De Rubeis, Francesco, 00042 Anzio RM (IT)
(74) Representative: Iannone, Carlo Luigi

(57) **Abstract**

The invention concerns a device (1) for levelling a support, particularly a support for camera and cinecameras, characterised in that it comprises a base element (4), provided with means (2) for coupling above a support or tripod, an intermediate element (10), interacting with said base element (4), and an upper element (5), coupling above said intermediate element (10), and provided above with means (3) for fixing the camera or cinecamera, wherein said base element (4) provides seats (6) for introduction of adjustment screws (7), interacting with said intermediate element (10), for adjusting levelling of intermediate element - upper element assembly, wherein said intermediate element (10) is coupled with respect to said base element (4) so as to freely rotate with respect to the same, wherein said upper element (5) is coupled with said intermediate element (10) so as to rotate along with the same with respect to said base element (4) and/or to rotate independently with respect to the intermediate element (10).

## Description

The present invention relates to a device for levelling a support, particularly a support for cameras and cinecameras.

More specifically, the invention relates to a device of the above kind permitting obtaining levelling of the support, particularly for cameras used to take those photos usually known as "panoramic photos".

During recent years, panoramic photos have had a remarkable evolution, particularly with development of digital photos.

Substantially, it is a photographic technique based on taking sequential photos, moving camera about a vertical axis, so as to place all images according a sequence along 360° rotation.

Obviously, in order to professionally realise this kind of photo it is necessary placing camera on a tripod, and thus obtaining perfect levelling of camera with respect to horizon, so as to have a perfect correspondence of side by side photos, thus being possible obtaining a perfect panoramic image.

Technical conditions exist to take a perfect panoramic photo that must be absolutely respected, among which precision of levelling and matching of focal point with rotation the head.

In order to obtain the levelling precision, devices are available on the market, to be placed on the camera tripod, in order to obtain levelling precision, both on the horizontal plane, or rotation plane, and on the vertical plane, or plane perpendicular to the rotation plane.

At present, it is not available on the market a device permitting obtaining both adjustments in a simple and functional way.

Object of the present invention is therefore that of providing a device for levelling a support, particularly for cameras for panoramic photos, permitting obtaining levelling both on the horizontal and on the vertical plane, and that further permits rotating camera on tripod to take the panoramic photo.

Further object of the present invention is a device of the above kind that is very simple to be manufactured and very cheap to realise.

It is therefore specific object of the present invention a device for levelling a support, particularly a support for camera and cinecameras, characterised in that it comprises a base element, provided with means for coupling above a support or tripod, an intermediate element, interacting with said base element, and an upper element, coupling above said intermediate element, and provided above with means for fixing the camera or cinecamera, wherein said base element provides seats for introduction of adjustment screws, interacting with said intermediate element, for adjusting levelling of intermediate element - upper element assembly, wherein said intermediate element is coupled with respect to said base element so as to freely rotate with respect to the same, wherein said upper element is coupled with said intermediate element so as to rotate along with the same with respect to said base element and/or to rotate independently with respect to the intermediate element.

In a first embodiment of the device according to the invention, the device for levelling a support, particularly a support for camera and cinecameras, comprises a base element, provided with means for coupling above a support or tripod, an intermediate element, having an shape complementary with the inner shape of said base element, and an upper element, coupling above said intermediate element, and provided above with means for fixing the camera or cinecamera, wherein the inner wall of said base element is sloped centrally, the lower wall of said intermediate element having a shape complementary, wherein said base element provides seats for lateral introduction of adjustment screws, interacting with said intermediate element, for adjusting levelling of intermediate element - upper element assembly, wherein said intermediate element is coupled with respect to said base element so as to freely rotate with respect to the same, wherein said upper element is coupled with said intermediate element so as to rotate along with the same with respect to said base element and/or to rotate independently with respect to the intermediate element.

In a second embodiment of the device according to the invention, said adjustment screws are vertical screws, between said intermediate element and said base element being provided a further element provided with three grooves coupling with the upper ends of said adjustment screws.

According to the invention, said means for coupling the base element with the support or tripod are comprised of a threaded hole.

Particularly, said threaded hole projects internally with respect to said base element, creating a positioning and rotation pin for said intermediate element.

Always according to the invention, said upper element centrally provides a threaded hole for fixing camera or every other element or instrument.

Preferably, according to the invention, means are provided opposing to the adjustment of levelling of intermediate element - upper element assembly, particularly a spring, coaxially provided with respect to the levelling device and maintained in the proper position by a screw coupled with said threaded hole provided on said base element.

According to the invention, three adjustment screws are provided, placed at 120° each other on the outer periphery of the base element, said screws acting on the surface of said intermediate element along a horizontal or inclined direction.

Still according to the invention, fixing means can be provided between the intermediate element and the upper element, particularly a screw passing through a threaded hole realised on said intermediate element and acting on a vertical wall of the upper element, or a threaded collar coupled outside said upper element, or a screwing coupling between upper element and intermediate element, permitting a micrometric adjustment.

Furthermore, according to the invention, a levelling reference bubble can be provided in the upper element, or laterally on the device, or bubble can be temporarily coupled above said upper element and removed once the levelling has been obtained.

The present invention will be now described, for illustrative but not limitative purposes, according to its preferred embodiments, with particular reference to the figures of the enclosed drawings, wherein:
figure 1 is a lateral view of a first embodiment of a device according to the invention;
figure 2 is a top view of device of figure 1;
figure 3 is a top view of device of figure 1 with the upper portion removed;
figure 4 is an exploded view of device of figure 1;
figure 5 is a vertical section view of device of figure 1; and
figure 6 is a vertical section view of a second embodiment of the device according to the invention.

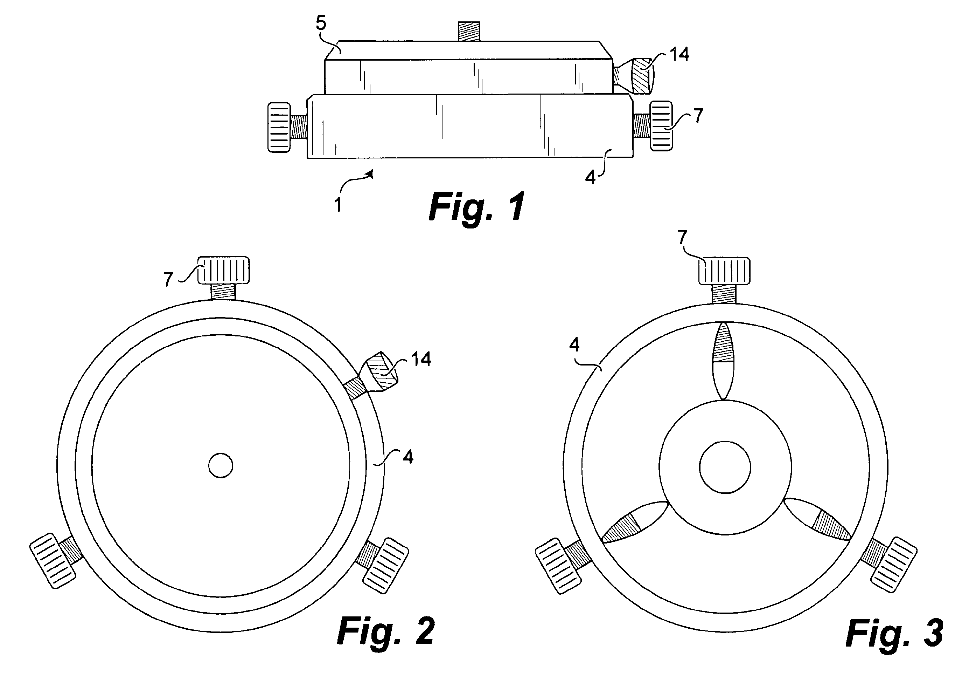

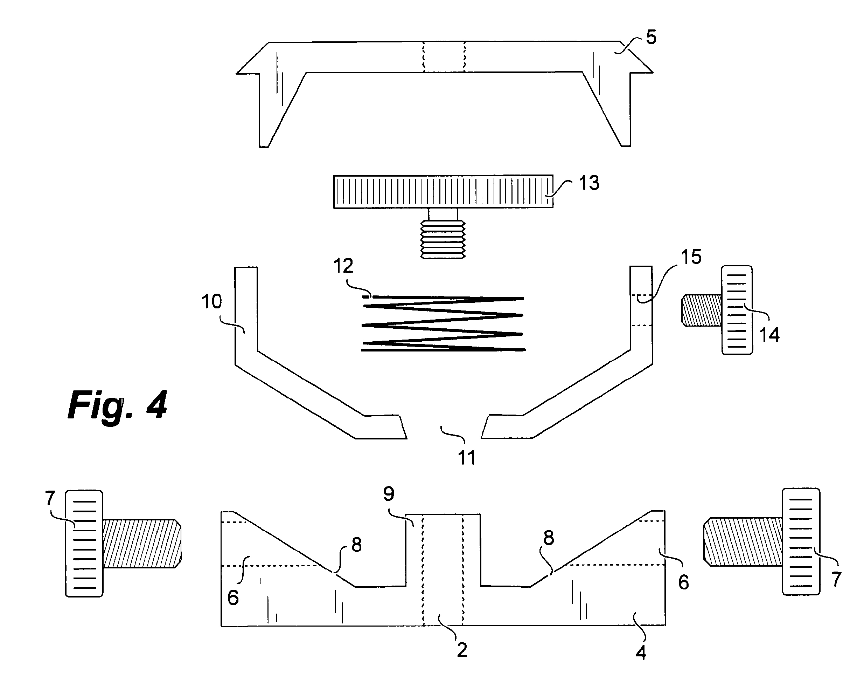

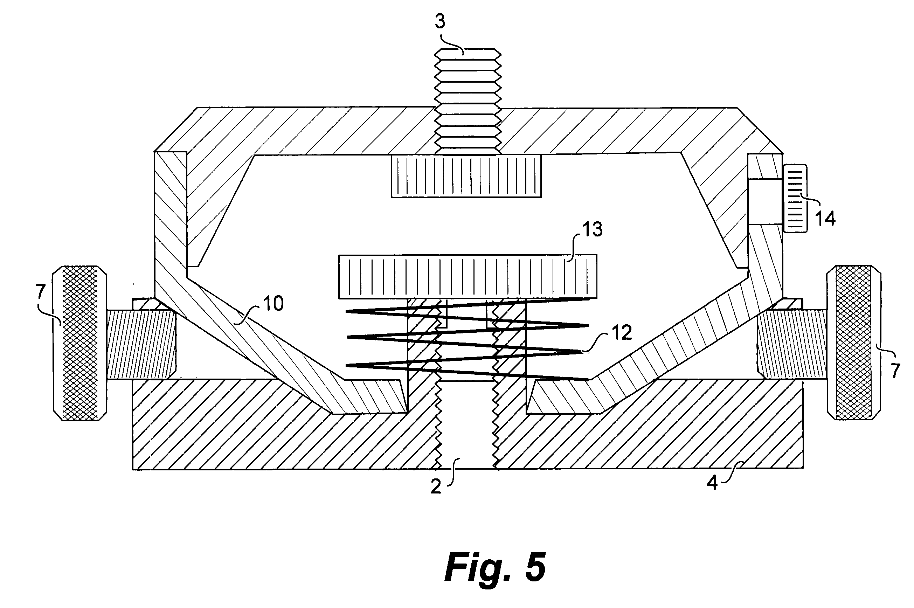

Observing first figures 1 - 5 of the enclosed drawings, it is possible observing a device according to the invention, generically indicated by reference number 1, providing a lower threaded hole 2, for coupling with support or tripod (not shown), and an upper threaded pin 3, for coupling the camera (not shown as well).

Device 1 according to the invention provides a base 4 and an upper element 5.

Said base 4, on which the threaded hole 2 is centrally provided on the lower part, circumferentially provides three holes 6, for screwing corresponding adjustment screws 7, as it will be described in greater detail in the following. Said adjustment screws are in the present embodiment represented acting along a horizontal direction, but it is well evident that they can be also provided inclined with respect to the base 4, relevant holes 6 being obviously correspondently inclined.

Inside, said base 4 has walls 8 converging toward its centre, where a pin 9 projects. Within which said threading is extended.

An element 10 is provided between said upper element 5 and said base 4, shaped in such a way to inside rest on said base 4, and centrally provided with a hole 11, placing about said pin 9.

A spring 12 is provided above said shaped element 10, then a screw 13 is screwed, passing through said spring 12, the hole 11, screwing within pin 9, in threading 2.

Upper element 5 fixedly joins with the shaped element 10, and can be constrained with the same, besides by friction, also providing a lateral screw 14, screwing in a suitable hole 15 provided laterally on the shaped element 10.

A standard bubble (not shown) can be provided, in order to check the levelling, or on the upper element 5, or laterally on device 1, or screwing the same on screw 3, and then removing the same before mounting the camera.

Operation of device according to the invention is really easy and convenient,

After having positioned device 1 on tripod, and having adjusted the height of the same by the standard means provided for adjusting height of tripod legs, then adjustment of levelling is carried out acting on the three screws 7.

In fact, wedging of the screws 7 between base 4 and the sloped wall of the shaped element 10, opposed by the spring action, determines its adjustment, acting of horizontal orientation of upper element 5.

Once checked by the bubble (not shown) the levelling of device, it is possible mounting the camera on the same.

Structure of upper element 5 - shaped element 10 assembly permits rotation of the camera with respect to base 4, so as to be able to take the panoramic photo in almost perfect conditions.

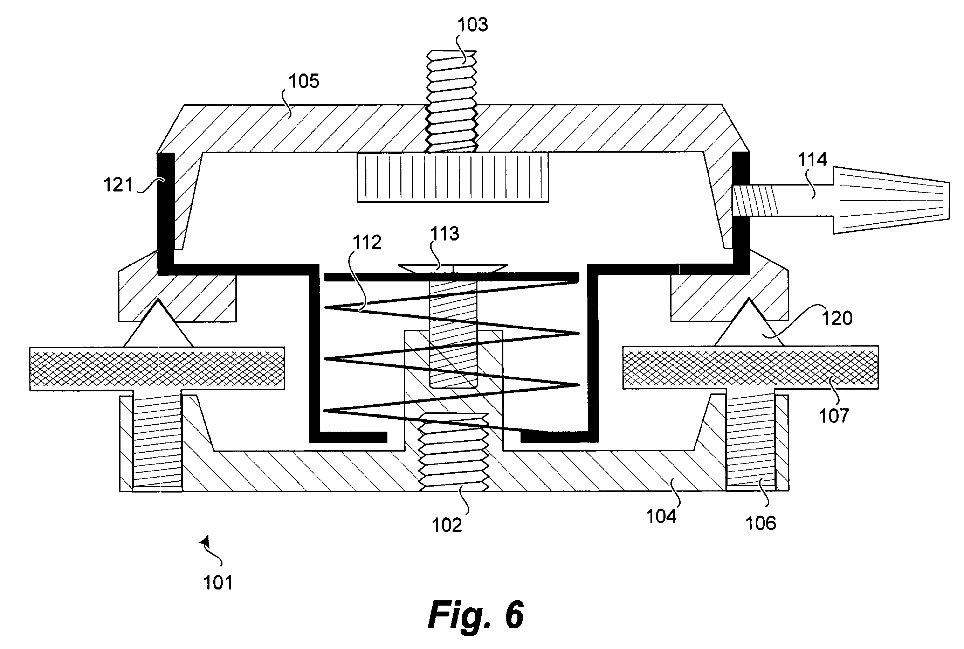

Coming now to observe figure 6 of the enclosed drawings, it is shown a second embodiment of the device according to the invention, generically indicated by reference number 101, providing a lower threaded hole 102, for coupling with support or tripod (not shown), and an upper threaded pin 103, for coupling the camera (not shown as well).

Device 101 according to the present embodiment provides a base 104, an upper element 105, and an intermediate element 110.

Said base 104, on which the threaded hole 102 is centrally provided on its lower part, provides three holes 106, for screwing corresponding adjustment screws 107, as it will be described in greater detail in the following. Said adjustment screws 107 act on corresponding screws 120 realised on said intermediate element 110.

A shaped element 121 is provided between said upper element 105 and said intermediate element 110, centrally housing a spring 112, maintained in its position by an adjustment screw 113.

Upper element 105 fixedly joins with the shaped element 121, and can be constrained with the same, besides by friction, also providing a lateral screw 114, screwing in a suitable hole 115 provided laterally on the shaped element 121.

In this case too, a standard bubble (not shown) can be provided, in order to check the levelling, or on the upper element 105, or laterally on device 101, or screwing the same on screw 103, and then removing the same before mounting the camera.

This second embodiment provides an adjustment on the vertical direction, obtained by action of screws 107 with grooves 120.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Device for levelling a support, particularly a support for camera and cinecameras, **characterised in that** it comprises a base element, provided with means for coupling above a support or tripod, an intermediate element, interacting with said base element, and an upper element, coupling above said intermediate element, and provided above with means for fixing the camera or cinecamera, wherein said base element provides seats for introduction of adjustment screws, interacting with said intermediate element, for adjusting levelling of intermediate element - upper element assembly, wherein said intermediate element is coupled with respect to said base element so as to freely rotate with respect to the same, wherein said upper element is coupled with said intermediate element so as to rotate along with the same with respect to said base element and/or to rotate independently with respect to the intermediate element.

2. Device for levelling a support, particularly a support for camera and cinecameras according to claim 1, **characterised in that** it comprises a base element, provided with means for coupling above a support or tripod, an intermediate element, having an shape complementary with the inner shape of said base element, and an upper element, coupling above said intermediate element, and provided above with means for fixing the camera or cinecamera, wherein the inner wall of said base element is centrally sloped, the lower wall of said intermediate element having a shape complementary, wherein said base element provides seats for lateral introduction of adjustment screws, interacting with said intermediate element, for adjusting levelling of intermediate element - upper element assembly, wherein said intermediate element is coupled with respect to said base element so as to freely rotate with respect to the same, wherein said upper element is coupled with said intermediate element so as to rotate along with the same with respect to said base element and/or to rotate independently with respect to the intermediate element.

3. Device according to claim 1, **characterised in that** said adjustment screws are vertical screws, between said intermediate element and said base element being provided a further element provided with three grooves coupling with the upper ends of said adjustment screws.

4. Device according to claim 2 or 3, **characterised in that** said means for coupling the base element with the support or tripod are comprised of a threaded hole.

5. Device according to claim 3 or 4, **characterised in that** said threaded hole projects internally with respect to said base element, creating a positioning and rotation pin for said intermediate element.

6. Device according to one of the preceding claims, **characterised in that** said upper element centrally provides a threaded hole for fixing camera or every other element or instrument.

7. Device according to one of the preceding claims, **characterised in that** means are provided opposing to the adjustment of levelling of intermediate element - upper element assembly.

8. Device according to claim 7, **characterised in that** said means are comprised of a spring, coaxially provided with respect to the levelling device and maintained in the proper position by a screw coupled with said threaded hole provided on said base element.

9. Device according to one of the preceding claims, **characterised in that** three adjustment screws are provided, placed at 120° each other on the outer periphery of the base element, said screws acting on the surface of said intermediate element along a horizontal or inclined direction.

10. Device according to one of the preceding claims, **characterised in that** fixing means are provided between the intermediate element and the upper element.

11. Device according to claim 10, **characterised in that** said fixing means between the intermediate element and the upper element are comprised of a screw passing through a threaded hole realised on said intermediate element and acting on a vertical wall of the upper element.

12. Device according to claim 10, **characterised in that** said fixing means between the intermediate element and the upper element are comprised of a threaded collar coupled outside said upper element.

13. Device according to claim 10, **characterised in that** said fixing means between the intermediate element and the upper element are comprised of a screwing coupling between upper element and intermediate element, permitting a micrometric adjustment.

14. Device according to one of the preceding claims, **characterised in that** a levelling reference bubble is provided in the upper element.

15. Device according to one of the preceding claims 1 - 13, **characterised in that** a levelling reference bubble is provided laterally on the device.

16. Device according to one of the preceding claims 1 - 12, **characterised in that** a levelling reference bubble is temporarily coupled above said upper element and removed once the levelling has been obtained.

17. Device according to each one of the preceding claims, substantially as illustrated and described.
